# EUROPEAN PATENT APPLICATION

(11) **EP 4 779 293 A1**
(43) Date of publication of application: **22.07.2026**
(21) Application number: 25152342.9
(22) Date of filing: 16.01.2025
(51) Int. Cl.: G01N 21/17, G01N 29/24

(54) **PHOTOACOUSTIC GAS SENSOR AND LEAKAGE DETECTION SYSTEM**

(71) Applicant: Infineon Technologies AG, 85579 Neubiberg (DE)
(72) Inventor: GLACER, Christoph, 81827 München (DE); MANZ, Johannes, 80807 Muenchen (DE); HAUFF, Michael, 81379 München (DE)
(74) Representative: Infineon Patent Department

(57) **Abstract**

A photoacoustic gas sensor (100) comprises a substrate (110) and a measurement cell (120) within the substrate. An emitter (130) is mounted on the substrate (110) and configured to emit light into the measurement cell (120). A sensor (140) is mounted on the substrate (130) and configured to measure pressure variations in the measurement cell (120).

## Description

### Field

The present disclosure relates to photo-acoustic sensors having an efficient layout.

### Background

Gas sensing technologies play an indispensable role across diverse domains, including environmental monitoring, industrial safety, and medical diagnostics. Within this field, three principal sensor types prevail: non-dispersive infrared (NDIR) sensors, chemical sensors, and photo-acoustic sensors (PAS). Each of these technologies exhibits distinctive advantages and limitations, making them suitable for specific applications.

The photoacoustic principle has emerged as an attractive solution due to its exceptional selectivity and the relatively low cost of its components. Extensive testing, including setups developed by industry leaders, has demonstrated its high sensitivity to gases such as carbon dioxide. Despite these promising attributes, commercially available PAS systems, alongside NDIR systems, remain prohibitively expensive due to their intricate designs and reliance on specialized components.

Chemical sensors offer a more economical alternative but are hampered by relatively poor selectivity when compared to optical systems employing single wavelengths or filter-based mechanisms. This drawback significantly constrains their utility in high-precision and high-reliability contexts.

PAS systems, as currently implemented, face further limitations stemming from their physical design. The size of the measurement cell is dictated by the spatial arrangement and geometry of the emitter and detector. Similarly, the overall footprint is determined by component dimensions and placement tolerances, while the height is influenced by the light absorption properties of the target gas. Moreover, the co-housing of the emitter and detector presents challenges in incorporating a reference channel. Another critical constraint lies in gas diffusion, where the time required for gas to traverse the inlet into the measurement cell is limited by the cell's volume and the cross-sectional area of the inlet port.

Collectively, these constraints underscore the urgent need for a more adaptable and efficient PAS layout. Innovations addressing these issues would not only enhance the performance and flexibility of PAS systems but also broaden their accessibility, paving the way for wider adoption in a variety of demanding applications.

### Summary

An example relates to a photoacoustic gas sensor. It consists of a substrate with a measurement cell embedded within it. A light emitter is mounted on the substrate to emit light into the measurement cell, while a sensor, also mounted on the substrate, detects pressure variations within the measurement cell. Integrating the measurement cell into the substrate may reduce the sensor's overall size, resulting in a compact design suitable for space-constrained environments.

According to some embodiments, the sensor incorporates a MEMS microphone with its microphone port aligned toward the substrate's surface. This alignment ensures optimal positioning relative to the measurement cell, enhancing signal quality and accuracy.

Optionally, the emitter features a filter designed to transmit a specific wavelength absorbed by the target gas. Positioned between the measurement cell and the emitter's radiation source, this filter may enhance the gas detection process's selectivity, enabling accurate identification of target gases while minimizing interference.

According to some embodiments, the emitter is enclosed in a protective housing, shielding it from environmental factors such as dust and moisture. This design improves the sensor's durability and ensures reliable operation in various conditions.

Optionally, the substrate consists of two sub-layers. The first sub-layer includes a recess that forms part of the measurement cell, while the second sub-layer, positioned between the first sub-layer, the emitter, and the sensor, contains openings that connect the recess to the emitter and the sensor. This multi-layer design allows for precise control over the measurement cell's geometry, enhancing sensor performance and simplifying the manufacturing process.

According to some embodiments, the emitter and the sensor are mounted on opposite sides of the substrate, decreasing the footprint of the sensor. This configuration reduces interference between the two components, resulting in more accurate measurements.

Optionally, a ventilation opening connects the measurement cell to the external environment, facilitating efficient gas exchange and ensuring fresh gas samples are continuously supplied to the measurement cell.

Further optionally. additional ventilation openings can be added to accelerate gas exchange, enabling the sensor to respond quickly to changes in gas concentrations also by means of convection and not only by diffusion as in the case of single openings.

According to some embodiments, these ventilation openings are covered with a membrane to prevent contaminants from entering the measurement cell, thus maintaining sensor integrity and extending its operational life.

According to some embodiments, the sensor also incorporates a second measurement cell, integrated into the substrate, which extends from the emitter to a second sensor. This additional cell allows the device to detect multiple gases or provide redundancy, enhancing its versatility and reliability.

Optionally, the emitter is equipped with dual filters, each tuned to a specific wavelength. One wavelength can be absorbed by a first gas, such as carbon dioxide, while the other can be absorbed by a second gas, such as a refrigerant. This dual-filter setup enables simultaneous detection of multiple gases, broadening the sensor's range of applications.

According to some embodiments, both the emitter and the sensor are mounted on the surface of the substrate, while the ventilation opening is strategically placed at the side of the substrate. This placement can minimize its impact on the optical path and enhances the sensor's design flexibility.

Optionally, the sensor includes a measurement circuit that processes signals from both sensors and adjusts the first sensor's signal using data from the second sensor. This signal correction capability improves measurement accuracy by accounting for environmental factors and potential cross-sensitivity.

According to some embodiments, the sensor is designed to be integrated into a leakage detection system. By incorporating the photoacoustic gas sensor, such a system can rapidly and reliably identify gas leaks, enhancing safety and reducing environmental risks. These features collectively make the photoacoustic gas sensor a versatile and efficient solution for a wide range of applications.

### Brief description of the Figures

Some examples of apparatuses and/or methods will be described in the following by way of example only, and with reference to the accompanying figures, in which
Fig. 1 illustrates an embodiment of a photoacoustic gas sensor;
Fig. 2 illustrates a further embodiment of a photoacoustic gas sensor;
Fig. 3 illustrates another embodiment of a photoacoustic gas sensor;
Fig. 4 illustrates a fourth embodiment of a photoacoustic gas sensor;
Fig. 5 illustrates an embodiment of a photoacoustic gas sensor;
Fig. 6 illustrates an embodiment of a photoacoustic gas sensor having 2 channels; and
Fig. 7 illustrates a particular way as to how the measurement cell can be created using two sub-substrates.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

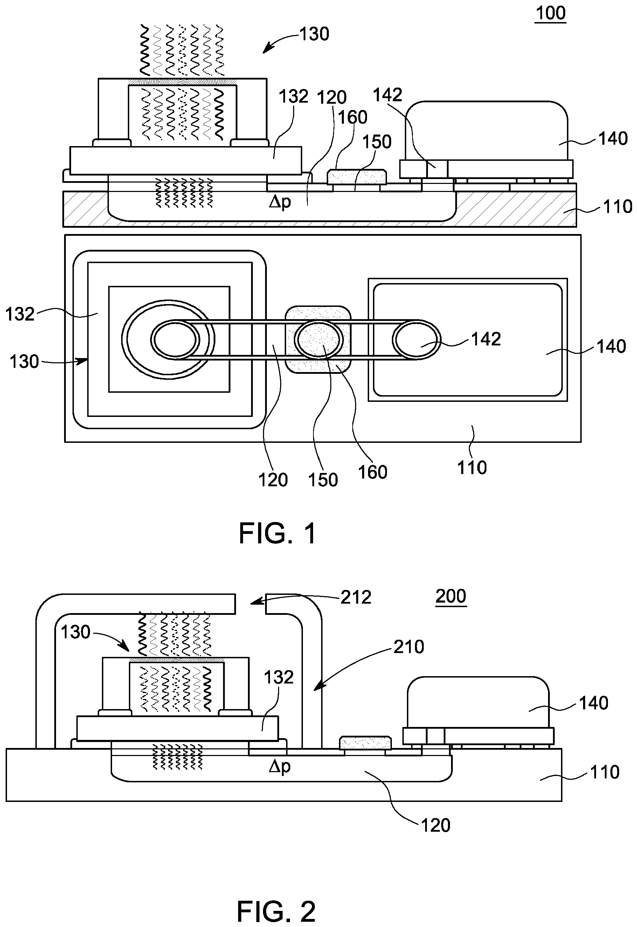

Fig. 1 illustrates a cross section view and a top view of an embodiment of a photoacoustic gas sensor 100.

The photoacoustic gas sensor 100 comprises multiple components that are mounted on a substrate 110. The substrate 110 is a Printed Circuit Board (PCB) in the embodiment of fig. 1. The measurement cell 120 for the gas to be detected is formed within the substrate 110. An emitter 130 to generate and emit light into the measurement cell 120 is mounted on the substrate 110. Likewise, a sensor 140 to measure pressure variations in the measurement cell 120 is mounted on the substrate 130 on the same side of the substrate and the measurement cell 120 extends from underneath the emitter 130 to the sensor 140.

A ventilation opening 150 connects the measurement cell 120 with the environment and a membrane 160 covers the ventilation opening 150. The ventilation opening is a small passage connecting the sensor's measurement cell 120, where gas detection occurs, to the external environment. The opening allows gas molecules from the surrounding air to flow into and out of the measurement cell 120, enabling the detection of gas concentrations through the photoacoustic effect. The primary function of the ventilation opening 150 is to facilitate gas exchange, ensuring that the target gas can reach the measurement cell for accurate detection. Further, the membrane defines a border of the volume the sensor 140 is placed in and assures that is acoustically tight. additionally, the design of the ventilation opening 150 and the membrane 160 ahelps block external noise while still allowing gas molecules to pass through. This ensures that the sensor detects only the acoustic signals generated by the gas inside the measurement cell 120, resulting in more accurate measurements. Ventilation openings may also serve to balance internal and external pressure, keeping the sensor stable even when environmental conditions change.

To provide further protection and acoustic isolation, the ventilation opening 150 is covered with membrane 160 that let gas through while blocking dust, liquids, and other contaminants, thus extending the sensor's lifespan. As opposed to the holes in a membrane 160 that allow gas diffusion, the size of the ventilation opening 150 is significantly larger.

In the embodiment illustrated in fig. 1, the sensor 140 configured to measure pressure variations is a MEMS microphone, also called Silicon Microphone. The microphone port 142 of the MEMS microphone is directed towards the surface of the substrate 110, where the measurement cell 120 also extends to the surface of the substrate 110. A MEMS microphone is a pressure-sensitive device designed to detect sound waves, which are pressure variations in the air. Inside a MEMS microphone, there is a thin, flexible diaphragm suspended above a fixed backplate. When sound waves or pressure variations reach the microphone, they cause the diaphragm to vibrate. The distance between the diaphragm and the backplate changes with these vibrations, creating a change in capacitance or resistance, depending on the microphone design. This change is then converted into an electrical signal that the sensor can process. Within the photoacoustic gas sensor 100, when gas molecules absorb light from the sensor's emitter 130, they heat up and expand, causing periodic pressure waves within the measurement cell 120. The MEMS microphone 140 detects these pressure variations as sound waves. Since the waves are directly related to the concentration of the target gas, the sensor can interpret the electrical signals generated by the MEMS microphone 140 to determine gas concentration. The MEMS microphone 140 functions as a precise and sensitive pressure sensor, making it a good choice for photoacoustic gas sensing applications.

As opposed to conventional solutions enclosing the emitter 130 and the sensor 140 with a common housing, integrating the measurement cell 120 into the substrate 110 may reduce the sensor's overall size, resulting in a compact design suitable for space-constrained environments. Integrating the measurement cell 120 into the substrate 110 does not necessarily mean that the entire volume for the gas to be detected is within the substrate 110. Some parts of the volume may also be outside the substrate, for example external pipes or smaller housings designed as an inlet for the gas or the like, as long as significant part of said volume is within the substrate 110. As further illustrated in figs. 2 to 6, integrating the measurement cell 120 into the substrate 110 does furthermore enable multiple design options to adapt the sensor, its footprint and shape to multiple different application scenarios.

In summary, fig. 1 illustrates a basic embodiment with the capability to measure in a single measurement cell 120, that is, the embodiment measures a single gas channel without a reference channel or without a second gas channel. A packaged silicon microphone is chosen as sensor 140 and a bare die Micro Electro Mechanical Structure (MEMS) heater together with an optical filter 132 is chosen as emitter 130. The measurement cell 120 is closed (at least with a permeable membrane 160) to provide a constant volume at typical frequencies between 10 and 100 Hz. The channel comprising the measurement cell 120 is formed in the PCB 110.

Since the embodiments illustrated in figs. 2 to 6 are based on the same concept as the embodiment of fig. 1, the following description will only elaborate on the differences between the discussed embodiments and the embodiment of fig. 1.

Fig. 2 illustrates a further embodiment of a photoacoustic gas sensor. Further to the embodiment of fig. 2, the sensor's emitter is protected by an additional housing 210. The housing 210 provides mechanical protection for the emitter 130. The housing 210 has a ventilation opening 212. If, for example, the source of radiation is a heating element to generate gray body radiation, the ventilation opening may serve to avoid overpressure due to thermal expansion of the gas inside the housing 210.

In other words, Casing / Housing 210 around MEMS heater protect sit from damage and additionally blocks light from shining in* and out. The housing 210 ca optionally be structured as a collimating mirror to reflect light from the top of the emitter into the emitter port and further into the measurement cell.

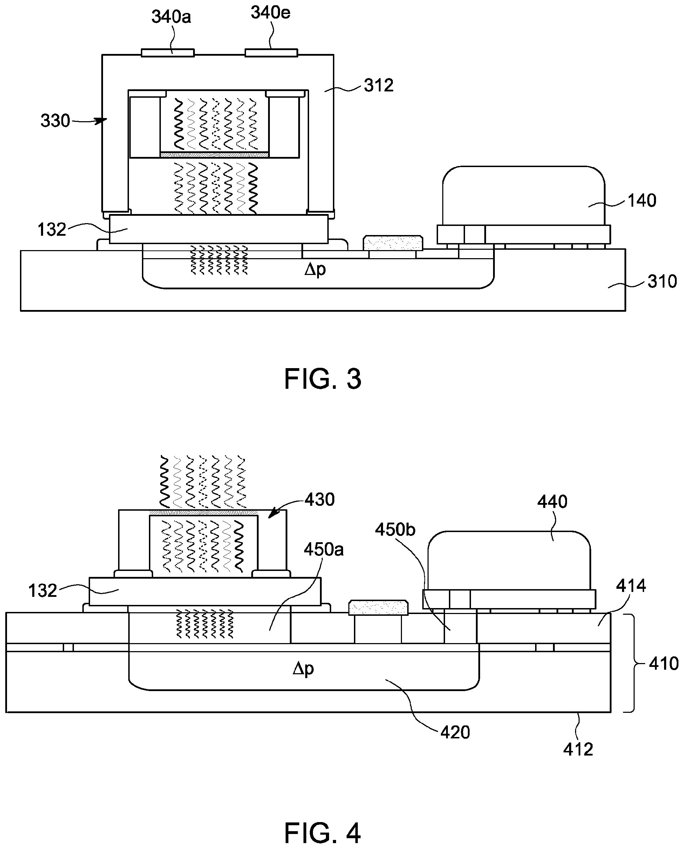

Fig. 3 illustrates another embodiment of a photoacoustic gas sensor with the emitter 330 being mounted upside down in a housing so that the emitter 330 can be powered by pads 340a and 340b and independent from the substrate 310. In other words, a packaged MEMS heater is used as an IR emitter in the embodiment illustrated in fig. 3.

Fig. 4 illustrates a further embodiment of a photoacoustic gas sensor having a substrate 410 composed of two sub-substrates. A first sub-substrate 412 has a recess 420 forming at least a part of the measurement cell, The second sub-substrate 412 is arranged between the first sub-substrate 412 and the emitter 430 and the sensor 440. The second sub-substrate 414 comprising openings 450a and 450b connecting the recess 420 with the emitter 430 and the sensor 440. Fig. 4 illustrates an efficient way as to how the measurement cell of a photoacoustic gas sensor can be created within a substrate to which the sensor 440 and the emitter 430 are mounted.

In other words, fig. 4 illustrates an embodiment where the recess 420 forming the part of the channel (the measurement cell 420) in the bottom PCB (the first sub-substrate 412) is open, which is easy to manufacture.

A second "top PCB" (second sub-substrate 414) is holding the components and will be used to seal-off the topside of the channel in the bottom PCB 412. Hence, no complicated processes is needed to form a buried channel in a PCB constituting the measurement cell.

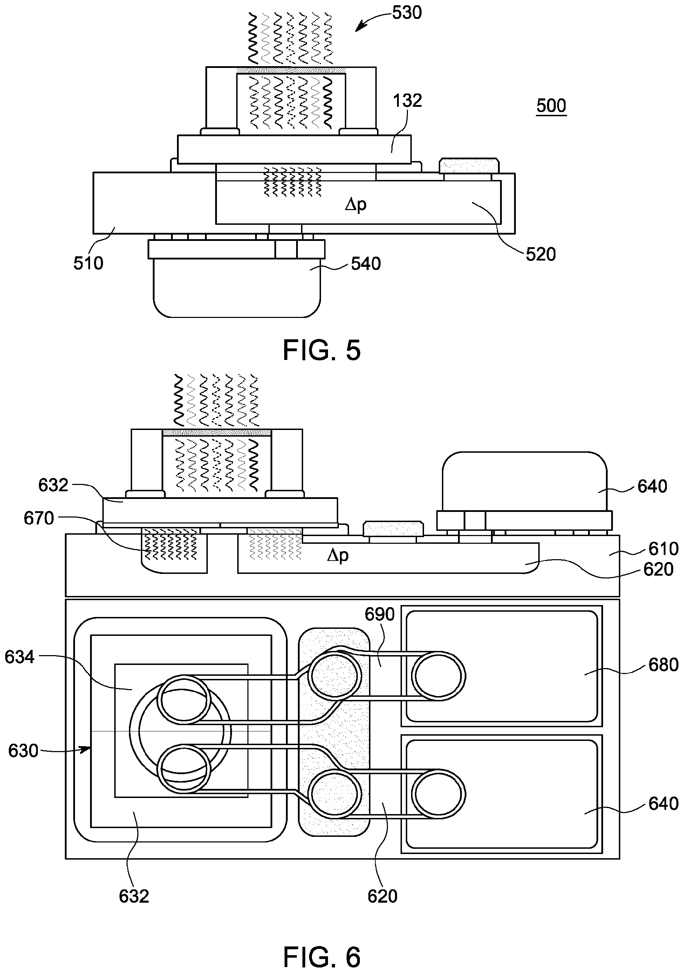

Fig. 5 illustrates an embodiment of a photoacoustic gas sensor having sensor 540 and emitter 530 on different sides of the substrate 510. In other words, the emitter 530 is mounted on the opposing side of the substrate 510 than the sensor 540. In other words, the embodiment of fig. 5 is a double-sided assembly configuration, resulting in a small footprint of the photoacoustic gas sensor.

Fig. 6 illustrates an embodiment of a photoacoustic gas sensor having 2 channels. Further to a first measurement cell 620, a second measurement cell 670 extending from the emitter 630 to a second sensor 680 within the substrate 610. The second sensor 680 is mounted on the substrate 610 and configured to measure pressure variations in the second measurement cell 670. If the emitter 630 emits light of identical wavelength into the first measurement cell 620 and the second measurement cell 670, redundancy can be achieved to increase fault tolerance and safety of the photoacoustic gas sensor of fig. 6, since both measurement cells are sensitive to the same gas.

If, however, different wavelengths can be emitted into the first measurement cell 620 and the second measurement cell 670, the photoacoustic gas sensor has 2 channels, each being sensitive to a different gas. In the embodiment of fig. 6, this is achieved in that the emitter 630 exhibits a common radiation source (a MEMS heater) and a first filter 632 tuned to transmit a first wavelength into the first measurement cell 620. The first wavelength is absorbed by a first gas determined by the photoacoustic gas sensor 600. A second filter 634 is tuned to transmit a second wavelength into the second measurement cell 670. The second wavelength is absorbed by a second gas determined by the photoacoustic gas sensor 600. The photoacoustic gas sensor 600, therefore, can detect two different gas types in a single detector having a small footprint.

For example, the first gas can be CO₂, and the second gas can be a refrigerant (e.g. R290 or R454b) to provide a sensor that can serve for both, environmental monitoring of CO2 and leakage detection for refrigerants.

In other words, the second channel of the two channels can serve either for reference channel usage or to detect a second gas. This functionality can be even shared for leakage detection systems, where the leakage channel would serve as a reference channel (as the concentration of a leakage gas is typically zero) - concrete example: CO₂ plus R290/R454b

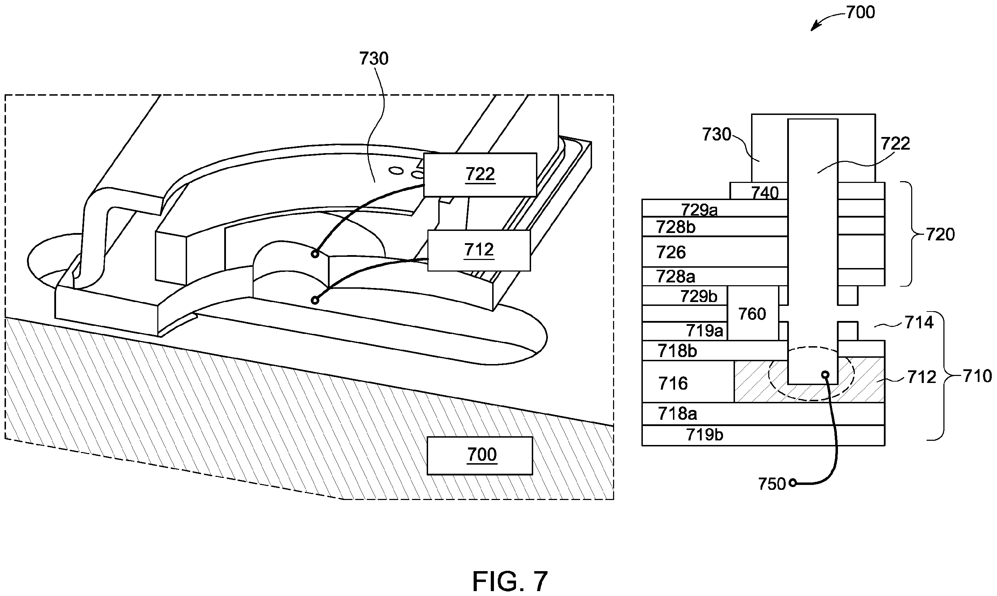

Fig. 7 illustrates a particular way as to how the measurement cell can be created using two sub-substrates.

Like the illustration of fig. 4, the substrate 700 is composed of at least 2 sub-substrates 710 and 720, each being a PCB.

The first sub-substrate 710 is the lower PCB and has a recess 712 forming at least a part of the measurement cell. The second sub-substrate 720 is between the first sub-substrate 710 and the emitter and the sensor 730. The first and second sub- substrates 710 and 720 may comprise one or more layers of laminates 716, 726 (e.g. a fiberglass-reinforced epoxy laminate) and one or more copper-layers 718a, 718b, 728a, 728b. Solderstop layers 719a, 719b, 291a, and 729b form the outermost layers of the first and second sub- substrates 710 and 720.

Fig. 7 only illustrates the sensor 730, which is glued to the second substrate by means of a glue layer 740. In the event of a MEMS sensor, appropriate glue may also be denoted MEMS glue.

The first and second sub- substrates 710 and 720 of the embodiment of fig. 7 are soldered together using solder connects 760 that extend from copper layer 718b to copper layer 728a. If solder connects 760 are used, said connects may also be used to electrically connect components mounted on the first and second sub- substrates 710 and 720. In alternative embodiments, the first and second sub- substrates 710 and 720 may additionally or alternatively also be connected using other mechanical interconnects such as screws or bolts.

The second sub-substrate 720 comprises an opening 722 connecting the recess 712 with the sensor 730. In the embodiment illustrated in fig. 7, the opening 722 (trench) connecting the measurement cell with the sensor 730 may be milled or formed using a laser. Depending on the chosen production technique for the opening 722, the shape of its end region 750 within the substrate 710 may look different. Further embodiments may, for example, create the trench by means of etching and lift off, which may result in the opening 722 ending at the surface of laminate 716 that faces copper layer 718b.

As an alternative to forming the measurement cell by means of a recess in the first sub-substrate, the measurement cell may also be formed at least partly by a free volume 714 between the first sub-substrate 710 and the second sub-substrate 720.

In summary, the previously described embodiments relate to photoacoustic gas sensing. There is a constant price pressure for gas sensors in "home appliance markets". Most of the production costs are caused by the module assembly and the size of the measurement cell of a photo-acoustic sensor (PAS sensor). The described concept offers the possibility for the detection of multiple gases (e.g. refrigerants together with CO₂) with a single PAS Sensor. This is not possible with the current PAS sensor. While high-end non-dispersive infrared (NDIR) sensors typically comprise of a reference channel to detect the drift of the infrared light source, there is nothing comparable for a PAS sensor. The disclosed concept can be used to build a reference channel system, while the overall system cost (compared to the current system configuration) might go down. Further, the diffusion time ("response speed") depends on the geometry of the measurement cell. According to the disclosed concept, the size of the cell can be decoupled from the components inside of it. A conventional PAS system is comprising a mid-infrared emitter and a microphone as detector. Those components are arranged inside a measurement cell. The drawback of this system layout is, that the measurement cell size is dependent on geometry and arrangement of emitter and detector. The footprint is defined by the area of those components and the placement tolerances. The height of the PAS is depending on the light absorption of the gas above the emitter. There is no (easily implementable) way to integrate a reference channel in such a system, as both emitter and detector share the same housing (sensor cell). The diffusion time speed of gas through the gas port ("inlet") into the measurement cell is limited by the volume of the sensor cell and the cross-section of the gas port.

According to the embodiments described herein, at least one measurement cell will be shaped within the substrate (PCB) of the sensor. This decouples the measurement cell geometry from the geometry of the components (emitter and detector). Due to this geometric decoupling, several advantages may be generated, such as size down of the system and the possibility for a cost-down. Eventual removal of the metal lid (which currently forms the measurement cell), which reduces cost and eventually reduces the diffusion time to result in a faster sensor response to external gas concentration changes than conventional PAS designs. Further, the possibility to form a reference channel with one (shared) emitter and multiple detectors arises and likewise the possibility to measure multiple gases with one sensor.

Further to the multiple design options shown in the figures, further options do exist. For example, the channel (the measurement cell) can be stretched or extended to the PCB sidewall as an alternative to a gas port on top or gas port to the bottom of the PCB. A collimating sphere can be built above the MEMS heater to bundle light into the filter and emitter port (with MEMS heater not being above the filter, but adjacent to it). A MEMS heater package with integrated filter forming the (bottom) substrate of this package can be used. A Multichannel system with more than two channels can be built. A Multichannel system with two or more emitters/heaters (with different opt. filters) can be used instead of two or more SiMics. Multiple arrangements of channels for a multichannel system are feasible (e.g. folded channels). A multichannel system can be built with multiple separate optical filters instead of one filter with different optical layers. Alternative materials for the substrate instead of FR4, copper and gold platings can be used. An external channel portion may be formed as a (metal) tube e.g. running below PCB.

The aspects and features described in relation to a particular one of the previous examples may also be combined with one or more of the further examples to replace an identical or similar feature of that further example or to additionally introduce the features into the further example.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A photoacoustic gas sensor (100), comprising:
a substrate (110);
a measurement cell (120) within the substrate;
an emitter (130) configured to emit light into the measurement cell (120), the emitter (130) mounted on the substrate (110);
a sensor (140) configured to measure pressure variations in the measurement cell (120), the sensor (140) mounted on the substrate (130).

2. The photoacoustic gas sensor of claim 1, wherein the sensor (140) comprises a MEMS microphone having a microphone port (142) directed to the surface of the substrate (110).

3. The photoacoustic gas sensor of claim 1 or 2, wherein the emitter (130) comprises a filter (132) tuned to transmit a wavelength to be absorbed by a gas determined by the photo-acoustic gas sensor (100), the filter (132) being positioned between the measurement cell (120) and a radiation source (134) of the emitter (130).

4. The gas sensor of any one of claims 1 to 3, further comprising:
a housing (200) enclosing the emitter.

5. The gas sensor of any one of claims 1 to 4, wherein the substrate (700) is composed of at least 2 sub-substrates,
a first sub-substrate (710) having a recess (712) forming at least a part of the measurement cell and
a second sub-substrate (720) between the first sub-substrate (710) and the emitter and the sensor (730), the second sub-substrate (720) comprising openings (722) connecting the recess (712) with emitter and the sensor (730).

6. The gas sensor of any one of claims 1 to 5, wherein the emitter (530) is mounted on the opposing side of the substrate (510) than the sensor (540).

7. The photoacoustic gas sensor of any one of claims 1 to 6, further comprising: a ventilation opening (150) connecting the measurement cell (120) with an environment.

8. The photoacoustic gas sensor of claim 7, further comprising:
At least one further ventilation opening connecting the measurement cell with an environment to improve a speed of gas exchange between the measurement cell and the environment.

9. The photoacoustic gas sensor of any one of claims 7 or 8, further comprising at least one membrane (160) covering the ventilation opening (150) or the further ventilation opening.

10. The gas sensor of any one of claims 1 to 9, further comprising:
a second measurement cell (670) extending from the emitter (630) to a second sensor (680) within the substrate (610); wherein
the second sensor (680) is configured to measure pressure variations in the second measurement cell (670), the second sensor mounted (680) on the substrate (610).

11. The gas sensor of claim 10, wherein the emitter comprises:
a first filter (632) tuned to transmit a first wavelength to be absorbed by a first gas determined by the photoacoustic gas sensor (600); and
a second filter (634) tuned to transmit a second wavelength to be absorbed by a second gas determined by the photoacoustic gas sensor (600).

12. The gas sensor of claim 11, wherein the first gas is CO₂ and the second gas is a refrigerant.

13. The gas sensor of any one of claims 7 to 12, wherein the emitter and the sensor are mounted on a surface of the substrate and wherein the ventilation opening is placed at a side of the substrate.

14. The gas sensor of any one of claims 10 to 13, further comprising:
a measurement circuit configured to evaluate the signals of the first sensor and the second sensor and to correct the signal of the first sensor based on the signal of the second sensor.

15. A leakage detection system, comprising at least one photoacoustic gas sensor according to any one of claims 1 to 14.

## Amended claims

### Amended claims in accordance with Rule 137(2) EPC.

1. A photoacoustic gas sensor (100), comprising:
a substrate (110, 700), wherein the substrate is a printed circuit board;
a measurement cell (120) within the substrate;
an emitter (130) configured to emit light into the measurement cell (120), the emitter (130) mounted on the substrate (110);
a sensor (140, 730) configured to measure pressure variations in the measurement cell (120), the sensor (140, 730) mounted on the substrate (110),
wherein the substrate (110, 700) is composed of at least two sub-substrates (710, 720), each of said at least two sub-substrates (710, 720) being a printed circuit board,
a first sub-substrate (710) having a recess (712) forming at least a part of the measurement cell, and
a second sub-substrate (720) between the first sub-substrate (710) and the emitter and the sensor (140, 730), the second sub-substrate (720) comprising openings (722) connecting the recess (712) with the emitter and the sensor (140, 730).

2. The photoacoustic gas sensor of claim 1, wherein the sensor (140) comprises a MEMS microphone having a microphone port (142) directed to the surface of the substrate (110).

3. The photoacoustic gas sensor of claim 1 or 2, wherein the emitter (130) comprises a filter (132) tuned to transmit a wavelength to be absorbed by a gas determined by the photoacoustic gas sensor (100), the filter (132) being positioned between the measurement cell (120) and a radiation source (134) of the emitter (130).

4. The photoacoustic gas sensor of any one of claims 1 to 3, further comprising: a housing (200) enclosing the emitter.

5. The photoacoustic gas sensor of any one of claims 1 to 4, wherein the emitter (530) is mounted on the opposing side of the substrate (510) than the sensor (540).

6. The photoacoustic gas sensor of any one of claims 1 to 5, further comprising: a ventilation opening (150) connecting the measurement cell (120) with an environment.

7. The photoacoustic gas sensor of claim 6, further comprising:
At least one further ventilation opening connecting the measurement cell with an environment to improve a speed of gas exchange between the measurement cell and the environment.

8. The photoacoustic gas sensor of any one of claims 6 or 7, further comprising at least one membrane (160) covering the ventilation opening (150) or the further ventilation opening.

9. The photoacoustic gas sensor of any one of claims 1 to 8, further comprising:
a second measurement cell (670) extending from the emitter (630) to a second sensor (680) within the substrate (610); wherein
the second sensor (680) is configured to measure pressure variations in the second measurement cell (670), the second sensor mounted (680) on the substrate (610).

10. The photoacoustic gas sensor of claim 9, wherein the emitter comprises:
a first filter (632) tuned to transmit a first wavelength to be absorbed by a first gas determined by the photoacoustic gas sensor (600); and
a second filter (634) tuned to transmit a second wavelength to be absorbed by a second gas determined by the photoacoustic gas sensor (600).

11. The photoacoustic gas sensor of claim 10, wherein the first gas is CO₂ and the second gas is a refrigerant.

12. The photoacoustic gas sensor of any one of claims 6 to 11, wherein the emitter and the sensor are mounted on a surface of the substrate and wherein the ventilation opening is placed at a side of the substrate.

13. The photoacoustic gas sensor of any one of claims 9 to 12, further comprising:
a measurement circuit configured to evaluate the signals of the first sensor and the second sensor and to correct the signal of the first sensor based on the signal of the second sensor.

14. A leakage detection system, comprising at least one photoacoustic gas sensor according to any one of claims 1 to 13.
